# EUROPÄISCHE PATENTANMELDUNG

(11) **EP 1 462 211 A1**
(43) Veröffentlichungstag der Anmeldung: **29.09.2004**
(21) Anmeldenummer: 03006536.1
(22) Anmeldetag: 24.03.2003
(51) Int. Cl.: B23Q 7/00, B23Q 7/14

(54) **Palettenwechselsystem**

(71) Anmelder: GROB-Werke Burkhart Grob e.K., 87719 Mindelheim (DE)
(72) Erfinder: Stave, Hinrich, Dr., 87719 Mindelheim (DE)
(74) Vertreter: Pfister, Stefan Helmut Ulrich

(57) **Zusammenfassung**

Die Erfindung betrifft ein Palettenwechselsystem für das Wechseln der das zu bearbeitende Werkstück tragenden Palette in einer Werkzeugmaschine, insbesondere einem Bearbeitungszentrum.

Die Erfindung zeichnet sich dadurch aus, daß der Mitnehmer derart ausgebildet ist, daß er für das Verbinden der Palette mit dem Mitnehmer durch die Bewegung des Bearbeitungstisches dient.

## Beschreibung

Die Erfindung betrifft ein Palettenwechselsystem für das Wechseln der das zu bearbeitende Werkstück tragenden Palette in einer Werkzeugmaschine, insbesondere einem Bearbeitungszentrum, wobei ein antreibbarer Mitnehmer die Palette zwischen einem Bearbeitungstisch in der Werkzeugmaschine und einem Rüstplatz außerhalb der Werkzeugmaschine bewegt. Des weiteren betrifft die Erfindung ein Verfahren zum Wechseln einer Palette in einer Werkzeugmaschine, insbesondere einem Bearbeitungszentrum, wobei die Palette von dem Bearbeitungstisch in der Werkzeugmaschine durch einen Mitnehmer auf einen Rüstplatz außerhalb der Werkzeugmaschine abgezogen (zurückbewegt) wird.

Vorgenannte Palettenwechselsysteme dienen dazu, die auf einer Palette aufgespannten Vorrichtungen beziehungsweise Werkstücke automatisch in die Werkzeugmaschine einzufördern und wenn die Bearbeitung abgeschlossen ist, diese aus der Werkzeugmaschine wieder abzufördern, also abzuziehen. Das Werkstück wird auf dem Rüstplatz auf der Palette außerhalb der Werkzeugmaschine aufgebaut, wobei oftmals mindestens zwei Rüstplätze vorgesehen sind, um eine möglichst kontinuierliche Bearbeitung durch die Werkzeugmaschine zu erreichen. Während ein erstes Werkstück auf einer ersten Palette in der Werkzeugmaschine bearbeitet wird, wird auf dem Rüstplatz bereits das nächste Werkstück vorbereitet.

Für die Bewegung der Palette zwischen Rüstplatz und Bearbeitungstisch in der Werkzeugmaschine dient ein Mitnehmer, der zum Beispiel auf einer Rollenkette befestigt ist.

Ist der Kettentrieb ortsfest angeordnet, so ist bei drehbaren Rundtischen als Bearbeitungstisch an der Palette eine sehr lange Klaue erforderlich, in die der Mitnehmer für Transportzwecke eingreift. Diese Klaue ist aber bei der Bearbeitung störend, da sie das dichte Heranfahren der Bearbeitungseinheit an den Tisch behindert. Des weiteren befindet sich ein Ende des Kettentriebes im Arbeitsraum, so daß sich Späne daran verfangen können, eine Abdeckung des Kettentriebes ist schwierig.

Des weiteren sind in Längsrichtung verfahrbare Kettentriebe bekannt. Dadurch ist es möglich, daß die Palettenklaue kürzer gebaut werden kann, sie bleibt aber eine über den Palettenumfang vorstehende Störkontur. Der Kettentrieb ist während der Bearbeitung außerhalb des Arbeitsraumes, dies wird aber mit erheblich technischem Aufwand für ein Heranführen des beweglichen Kettentriebes realisiert.

Den vorgenannten Lösungen des Standes der Technik ist gemein, daß die Palettenwechselzeit verhältnismäßig lange ist. Dies bedingt sich daraus, daß der Mitnehmer erst in Eingriff gebracht werden kann, nachdem der Tisch in Palettenwechselposition gebracht ist. Dies kann nach der Lösung des Standes der Technik erst am Ende des Bearbeitungsablaufes erfolgen, wenn der Bearbeitungstisch die aufgespannte Palette in die Wechselposition gebracht hat; erst dann ist ein Verbinden des Mitnehmers mit der Palette beziehungsweise der Klaue möglich.

Aus der Druckschrift EP 0 000 874 A1 ist eine Bearbeitungsmaschine mit einem gemeinsamen Antrieb für den Arbeitstisch und den Palettenwechsler bekannt. Der Palettenwechsler hat dabei zwei Ausleger, die die Palette entweder in den Arbeitsraum der Bearbeitungsmaschine hinein- bzw. heraustransportieren. Dazu führt der Palettenwechsler eine Bewegung für den Transport der Palette durch. Dieser Transport erfolgt durch Anstoßen des Armes des Palettenwechslers an die Palette, wodurch die Palette entlang von Schienen bewegt wird, welche die Palette bis in den Arbeitsraum führen. Während sich die Palette zur Bearbeitung in dem Arbeitsraum der Bearbeitungsmaschine befindet, wird der Palettenwechsler zurückbewegt.

Für den Wechsel der Paletten aus dem Arbeitsraum und das Einführen einer neuen Palette in den Arbeitsraum muß dann die Palette wieder in die Wechselposition zurückgeführt werden. Der Palettenwechsler kann dann sowohl die gerade bearbeitete Palette aus dem Arbeitsraum herausführen und gleichzeitig eine neue Palette in den Arbeitsraum hineinführen. Dabei befindet sich das System in jedem Fall außerhalb des Arbeitsraumes, was nachteilig ist, da hierfür zusätzlicher Platz vorgesehen werden muß und das Werkstück längere Zeit bewegt wird, innerhalb der keine Bearbeitung stattfinden kann, was zu geringer Effizienz bzw. Zerspanleistung führt.

Ein weiterer Nachteil ist, daß die durch die beiden Arme des Palettenwechslers entstehende Gabel ein Maximalmaß für eine Palette bestimmt. Damit ist die Bearbeitungsmaschine hinsichtlich der Bearbeitung von bestimmten Werkstücken größenmäßig in der Größe der Palette selbst eingeschränkt. Ein weiterer Nachteil in der zuvor beschriebenen Lösung ist dadurch angegeben, daß die Palette durch den Palettenwechsler lediglich kraftschlüssig bzw. durch das Anstoßen eines der Ausleger an die Palette platziert wird. Eine genaue Positionierung ist dadurch nicht möglich. Hierzu müssen gegebenenfalls besondere Fixierungsmittel vorgesehen sein.

Ein weiterer Nachteil der so bekannten Lösung nach der europäischen Patentanmeldung ist dadurch angegeben, daß die die Werkstücke tragenden Paletten durch den Arbeitsraum hindurchtransportiert werden. Das heißt, sie werden auf der einen Seite des Arbeitsraumes zugeführt und auf der anderen Seite des Arbeitraumes dann wieder heraustransportiert. Auch dies bringt bestimmte Zeitverluste mit sich, die insgesamt zu einer verhältnismäßig langen Palettenwechselzeit ebenfalls führen.

Vor diesem Stand der Technik hat sich die Erfindung die Aufgabe gesetzt, ein Palettenwechselsystem einerseits und andererseits ein Verfahren für das Wechseln einer Palette vorzuschlagen, das ein deutlich schnelleres Palettenwechseln erlaubt.

Gelöst wird diese Aufgabe dadurch, daß ein Palettenwechselsystem, wie eingangs beschrieben, dahingehend vorgeschlagen wird, daß für das Verbinden der Palette mit dem Mitnehmer die Bewegung des Bearbeitungstisches dient. Das erfindungsgemäße Verfahren schlägt vor, daß beim Abziehen der Palette zunächst der Mitnehmer im Arbeitsraum der Werkzeugmaschine positioniert wird und dann die Palette durch eine Bewegung des Bearbeitungstisches mit dem Mitnehmer verbunden wird und hernach die Mitnehmerpalette auf den Rüstplatz zieht.

Der erfindungsgemäße Vorschlag zielt darauf ab, eine Beschleunigung des Wechselprozesses dahingehend zu erreichen, daß noch während oder unmittelbar nach Beendigung der eigentlichen Bearbeitung des Werkstückes bereits der Mitnehmer im Arbeitsraum positioniert wird. Neben diesem ersten Schritt, der bereits zu einer gewissen Zeitersparnis beim Palettenwechseln führt, wird unabhängig dadurch vorgesehen, daß die Bewegung des Bearbeitungstisches zur Verbindung der Palette mit dem Mitnehmer ausgenutzt wird. In den bekannten Vorrichtungen beziehungsweise Systemen ist hier immer eine durch die Steuerung vorgegebene Folge einzuhalten, die aufgrund des Kettentriebes notwendig war. Der Kettentrieb setzte zunächst voraus, daß die Palette in der Wechselposition angekommen war, um dadurch den Mitnehmer in die Klaue einfädeln zu können. Wird aber für das Verbinden der Palette mit dem Mitnehmer die abschließende Bewegung des Bearbeitungstisches aus der Bearbeitungsposition in die Wechselposition (in der Werkzeugmaschine) ausgenützt, so kann dieses Zeitsegment beim Wechseln entsprechend verkürzt beziehungsweise doppelt genutzt werden, was zu einer entsprechenden kürzeren Wechselzeit führt.

Durch den erfindungsgemäßen Vorschlag wurde bereits eine Beschleunigung der Wechselzeit erreicht. Im Vergleich mit den verfahrbaren Kettenwechslern werden gemäß der erfindungsgemäßen Vorschläge circa 40 Prozent Wechselzeit eingespart. Erfolgt aber der Wechselprozeß schneller, so können bei ansonsten gleichbleibenden Anordnungen pro Zeiteinheit mehr Bearbeitungsschritte beziehungsweise Werkstücke bearbeitet werden, und die Leistung entsprechend ausgestatteter erfindungsgemäßer Bearbeitungszentren nimmt zu.

Da der Mitnehmer in den Arbeitsraum hineingreift, wird Platz gespart, da das Verbinden der Palette mit dem Wechsler, im Gegensatz zur Lösung im Stand der Technik, im Arbeitsraum erfolgt und keinen zusätzlichen Platz benötigt.

In einer bevorzugten Ausgestaltung der Erfindung ist vorgesehen, daß der Mitnehmer bei dem Verbinden mit der Palette sich unter dieser befindet und die Palette beziehungsweise ein Kupplungsstück oder eine Klaue an der Palette durch eine Bewegung der Palette durch den Bearbeitungstisch mit dem Mitnehmer verbunden beziehungsweise auf diesen aufgefädelt wird. Es wird hierbei vorgeschlagen, daß die Bewegung des Bearbeitungstisches, insbesondere am Ende eines entsprechenden Bearbeitungsprozesses, zum Auffädeln beziehungsweise Verbinden der Palette mit dem Mitnehmer verwendet wird. Dies setzt natürlich voraus, daß in diesem Fall der Mitnehmer bereits im Arbeitsraum positioniert ist, damit dann die Palette über den Mitnehmer bewegt werden kann, damit die Einfädelung beziehungsweise Kopplung stattfinden kann. Hieraus folgt aber, daß bereis während oder kurz nach Beendigung der Bearbeitung der Mitnehmer im Arbeitsraum eingebracht wird, was bei den bekannten Lösungen nicht möglich war. Wird aber der Mitnehmer bereits so frühzeitig positioniert, ergibt sich nochmals eine Zeitersparnis, da die entsprechende Heranführung des Mitnehmers parallel zur Bewegung des Tisches in die Wechselposition erfolgt.

Gemäß einer vorteilhaften Weiterbildung des erfindungsgemäßen Palettenwechselsystemes ist es vorgesehen, daß der Mitnehmer auf einem auf einer Führungsbahn bewegbaren Schlitten angeordnet ist. Dadurch wird es möglich, daß der Mitnehmer bereits während des Bearbeitungsvorganges bzw. kurz nach Beendigung des Bearbeitungsvorganges, ohne die Bearbeitung selbst zu behindern, in dem Arbeitsraum bereits positioniert werden kann. Die Führung auf einer Führungsbahn dient dabei einer positionsgenauen Führung des Mitnehmers, wodurch ebenfalls eine Verkürzung der Palettenwechselzeit erreicht wird.

Erfindungsgemäß wurde auch gefunden, daß es von Vorteil ist, wenn zur Verbindung der Palette mit dem Mitnehmer eine Klaue unterhalb der Palette angeordnet ist. Dabei ist es weiter von Vorteil, wenn diese Klaue verdeckt angeordnet ist und nicht von der Palette bzw. aus der Palette vorsteht. Dies dient insbesondere auch einer sicheren Verbindung der Palette mit dem Mitnehmer, wobei gewährleistet ist, daß die Klaue durch die bei der Bearbeitung anfallenden Späne beispielsweise nicht verschmutzt wird.

Dabei ist es weiterhin von Vorteil, wenn die Verbindung zwischen der Palette und dem Mitnehmer durch eine formschlüssige Verbindung erhalten wird. Dieses formschlüssige Verbinden von Mitnehmer und Palette kann für eine sehr genaue Positionierung der Palette in dem Arbeitsraum bzw. auf dem Rüstplatz dann genutzt werden.

Ein weiterer Aspekt der Erfindung ist dadurch angegeben, daß für die Führung des Schlittens eine Führungsschiene vorgesehen ist und eine Antriebseinheit über die Antriebsspindel den Schlitten antreibt.

Entsprechend einer vorteilhaften Weiterbildung des erfindungsgemäßen Palettenwechselsystems ist es vorgesehen, daß dabei der Mitnehmer rechtwinklig zur Bewegungsrichtung des Schlittens geradlinig ausgebildet ist, um ein seitliches, vorzugsweise rechtwinkliges Einfädeln der Palette über die Klaue auf den Mitnehmer zu erreichen.

Es ist weiterhin von Vorteil, wenn ein Gestell vorgesehen ist, welches die Palette außerhalb der Werkzeugmaschine trägt und den Rüstplatz bildet.

Es ist weiterhin von Vorteil, wenn das Gestell einen Kanal für die Aufnahme des Mitnehmerantriebes aufweist. Damit läßt sich ebenfalls eine sehr platzsparende Anordnung des erfindungsgemäßen Palettenwechselsystems an einer Bearbeitungsmaschine erreichen.

Entsprechend einer vorteilhaften Weiterbildung des erfindungsgemäßen Palettenwechselsystems ist es vorgesehen, daß mindestens zwei Rüstplätze pro Werkzeugmaschine vorgesehen sind.

Dabei ist es bevorzugt, wenn die mindestens zwei Rüstplätze parallel vor dem Arbeitsraum bzw. den Maschinentüren angeordnet sind, derart daß der Palettenwechsel aus bzw. in den Arbeitsraum jeweils zu dem gleichen Rüstplatz erfolgt, von dem die Palette in den Arbeitsraum gefördert wurde. Im Unterschied zum Stand der Technik werden die Werkstücke bzw. Paletten erfindungsgemäß jetzt nicht mehr durch die Bearbeitungsmaschine hindurch transportiert, sondern sie werden von dem Rüstplatz in den Arbeitsraum hinein gefördert, dort bearbeitet und nach Abschluß der Bearbeitung auf den gleichen Rüstplatz zurück transportiert, von dem sie in die Maschine hinein transportiert wurden. Gleichzeitig kann auf einem zweiten Rüstplatz eine weitere Palette mit zu bearbeitenden Werkstücken bestückt werden, so daß ohne Zeitverzug, nachdem das bearbeitende Werkstück inklusive der Palette aus der Bearbeitungsmaschine heraus transportiert wurde, das nächste Werkstück auf einer zweiten Palette dann in den Arbeitsraum durch eine dort angeordnete Maschinentüre transportiert wird. Durch diese veränderte Maschinenkonzeption kann erreicht werden, daß die durch die Ausbildung des Mitnehmers und der Klaue bereits angegebenen Verkürzungen des Palettenwechsels noch weiter verkürzt werden können. Selbstverständlich ist es auch möglich, noch mehrere Rüstplätze vor der Bearbeitungsmaschine vorzusehen, so daß dadurch die Bearbeitungsmaschine noch effektiver ausgenutzt werden kann.

Ein weiterer Aspekt des erfindungsgemäßen Palettenwechselsystems ist dadurch angegeben, daß der Mitnehmer der Palette an ihrem der Bearbeitungsspindel der Werkzeugmaschine abgewandten Palettenseite ergreift. Dies soll insbesondere gewährleisten, daß die Verbindung zwischen Mitnehmer und Palette nicht durch Verschmutzungen, die den Mitnehmer gegebenenfalls verschmutzen könnten, behindert wird.

Eine Weiterbildung der Erfindung ist gekennzeichnet durch eine Indexierung oder Festlegung der Palette auf dem Rüstplatz.

Erfindungsgemäß ist es auch von Vorteil, wenn das Gestell an seiner der Palette zugewandten Seite und/oder der Boden des Kanals eine schräg in Richtung auf die Werkzeugmaschine geneigte bzw. abgesenkte Oberfläche aufweist.

In einer bevorzugten Ausgestaltung der Erfindung ist vorgesehen, daß die Positionierung des Mitnehmers im Arbeitsraum bei noch geschlossener oder fast noch geschlossener Maschinentüre erfolgt. Wie später noch ausgeführt werden wird, ist vorgesehen, daß der Mitnehmer die Palette an ihrem außermittigen Bereich ergreift. Bei entsprechender Konstruktion ist es möglich, die Maschinentüre nur einen Spalt zu öffnen, um den Mitnehmer im Arbeitsraum zu positionieren. Dieser Spalt wird dabei nur so weit geöffnet, daß es ausreicht, daß der Mitnehmer in den Arbeitsraum hineingeführt werden kann.

Es ist aber auch möglich, daß die Maschinentüre eine, gegebenenfalls auch verschließbare Öffnung für den Mitnehmer aufweist, damit dieser bei ansonsten geschlossener Maschinentüre im Arbeitsraum positioniert werden kann. Zum Beispiel ist an der Maschinentüre im unteren Bereich ein entsprechender Ausschnitt vorgesehen, der das Einführen des Mitnehmers erlaubt und andererseits die Bewegungen der Maschinentüre, insbesondere die Schiebebewegung zum Öffnen der Türe nicht behindert.

Die vorgenannten Maßnahmen dienen letztendlich dazu, Zeit zu sparen beziehungsweise verschiedene Schritte parallel ablaufen zu lassen, um die notwendige Zeit zum Wechseln der Palette auf ein absolutes Minimum zu reduzieren.

Die Erfindung betrifft nicht nur das Palettenwechselsystem beziehungsweise das Verfahren zum Wechseln einer Palette, sondern betrifft in gleicher Weise auch eine Palette, für die nachfolgend unabhängig oder auch abhängig von den vorgenannten Gegenständen Schutz gesucht werden kann. Es ist daher vorgesehen, alle Merkmale dieser Anmeldung, gegebenenfalls fokussiert auf ihre Anwendung in einer Palette, als erfindungswesentlichen Gegenstand zu kombinieren.

Insbesondere dient aber diese Palette auch in einem Palettenwechselsystem, wie eingangs beschrieben, wobei die Palette Führungsmittel für eine Führung der Palette zwischen Rüstplatz und Bearbeitungstisch aufweist, die zum Beispiel als Nut oder T-artige Nut ausgebildet sind. Diese Führungsmittel wirken zusammen mit entsprechenden Führungsleisten, die am. Gestell, welches auch den Mitnehmer und dessen Antrieb trägt, angeordnet sind.

Entsprechend einer vorteilhaften Weiterbildung der erfindungsgemäßen Palette bzw. des erfindungsgemäßen Palettenwechselsystems ist es vorgesehen, daß an der Führungsschiene für die Palette eine demontierbare Kippsicherungsleiste vorgesehen ist, die in eine Hinterschneidung der Führungsnut der Palette greift.

Dabei ist es von besonderem Vorteil, wenn an der Kippsicherungsleiste ein Sicherheitsschalter vorgesehen ist.

Gemäß einer vorteilhaften Weiterbildung der Erfindung ist es weiterhin vorgesehen, daß der Antrieb des Mitnehmers hydraulisch, servopneumatisch oder elektrisch oder elektromagnetisch ausgebildet ist und Zugmittel, insbesondere Riemen oder Ketten oder Ritzel-Zahnstangen, Antriebe, Gewindespindeln, Linearmotoren oder Servo-Antriebe Verwendung finden.

Des weiteren weist die Palette eine Klaue auf, die dazu dient, die Palette mit einem Mitnehmer für Transportzwecke zu verbinden. Diese Klaue oder auch allgemein Kopplungsstück oder Verbindungselement genannt, dient dazu, mit dem Mitnehmer eine formschlüssige Verbindung herzustellen, um die Palette mit dem Mitnehmer entsprechend bewegen zu können. Über diese formschlüssige Verbindung wird dann die Kraft zur Bewegung von dem Mitnehmer auf die Palette beim Ein- bzw. Austransport eingebracht. Dadurch ist insbesondere eine sehr sichere und positioniergenaue Verbindung angegeben, die deutliche Verbesserungen gegenüber den aus dem Stand der Technik bekannten Lösungen mit sich bringt. Es gelingt, die Palette im Arbeitsraum hinreichend exakt für die nachfolgenden Transportund/oder Bearbeitungsaufgaben zu positionieren.

Im Stand der Technik ist es bekannt, diese Klaue über die Kontur oder den Grundriß der eigentlichen Palette hervorstehend auszubilden, um den bekannten Kettentrieben eine Möglichkeit zum Ergreifen der Klaue zu geben. Die Ausgestaltung im Stande der Technik ist besonders dann von Nachteil, wenn verhältnismäßig kleine Werkstücke auf der Palette gespannt sind. Dann behindert die Klaue das dichte Heranfahren der Maschine beziehungsweise der Werkzeugspindel an die Palette, es werden lange Werkzeuge benötigt. Des weiteren begrenzt die hervorstehende Klaue auch das Heranfahren der Werkzeugspindel an die Palette, wenn nämlich die Klaue nicht genau mittig an der Palette angeordnet ist. Steht nämlich die Bearbeitungseinheit direkt vor der Klaue, dann muß die Bearbeitungseinheit zuerst etwas zurückfahren, bevor die Palette verschwenkt werden kann. Dabei ist zu beachten, daß die Klaue, wenn diese außermittig angeordnet ist, einen größeren Schwenkradius aufweist, weswegen dann die Bearbeitungseinheit stört. Die erfindungsgemäße Weiterentwicklung erlaubt aber die die Realisierung von platzsparenden Werkzeugmaschinen, da der Platz, der für die Palette vorgehalten werden muß, dann reduziert werden kann, wenn an der Palette keine vorstehende Klaue existiert. Es resultiert hieraus ein nicht unbeträchtlicher Platzgewinn, zum einen in der Bauform der Werkzeugmaschine beziehungsweise des kompletten Bearbeitungszentrums (zum Beispiel für dessen Transport), aber auch im Platzbedarf in der entsprechenden Halle.

Darüber hinaus bietet diese Ausgestaltung einen Vorteil im Hinblick auf die Funktionalität. Bei den bekannten, über die Palette vorstehenden Klauen hat es sich regelmäßig ergeben, daß auch auf den vorstehenden Klauenarmen Späne aufliegen können, die unter Umständen den Koppelvorgang behindern oder unmöglich machen.

Der erfindungsgemäße Vorschlag schlägt vor, daß nunmehr die Klaue unter der Palette angeordnet ist. Durch diese Ausgestaltung wird erreicht, daß die Klaue platzsparend an der Palette untergebracht ist und somit insgesamt weniger Platz benötigt wird. Da aber die Klaue selber von der Palette geschützt ist, ist auch die Gefahr einer Verschmutzung durch herumfliegende Späne und so weiter deutlich reduziert, wenn nicht sogar eliminiert, was zu einer höheren Betriebssicherheit führt.

In einer bevorzugten Ausgestaltung der Erfindung ist vorgesehen, daß an der Palette Spüldüsen für flüssiges und/oder gasförmiges Reinigungsmedium vorgesehen ist. Die Spüldüsen dienen dazu, die Palette selber oder die Auflageflächen der Palette oder andere Gegenstände oder Bereiche von Schmutz aber auch Spänen und so weiter zu reinigen. Die Erfindung wird insbesondere bei spanabhebenden Maschinen eingesetzt, wobei hier das Verschmutzungsproblem einerseits besteht, andererseits aber eine hohe oder höchste Genauigkeit bei der Bearbeitung gefordert wird. Diese hohe Genauigkeit kann aber durch Späne beeinträchtigt werden, die zum Beispiel bei entsprechenden Spannmitteln anliegen und so ein hochgenaues Spannen unmöglich machen. Regelmäßig wird angestrebt, daß die Späne möglichst in den Spanabförderkanal weggeschwemmt werden und entsorgt werden. Die erfindungsgemäße Lösung erlaubt zum einen eine Art Selbstreinigung der Palette durch die vorgesehenen Spüldüsen, durch die entweder flüssiges Reinigungsmedium, zum Beispiel Kühlflüssigkeit, wie es bei Werkzeugmaschinen üblich ist, geleitet wird oder aber es werden gasförmige Reinigungsmedien, zum Beispiel Druckluft und dergleichen, eingesetzt. Zum anderen ist aber auch vorgesehen, daß die Palette, wenn sich diese bewegt, den Weg selbst reinigt und so ein Verschleppen von Spänen aus oder in die Werkzeugmaschine, insbesondere aber auf die Spannplätze am Bearbeitungstisch und so weiter, verhindert. Es wird daher in einer bevorzugten Ausgestaltung der Erfindung vorgesehen, daß jeweils die in Transportrichtung der Palette vorne angeordneten Spüldüsen mit Reinigungsmedium versorgt werden.

Günstigerweise wird in diesem Falle in der Palette ein entsprechendes Leitungssystem für das Reinigungsmedium, zum Beispiel entsprechende Leitungsbohrungen vorgesehen, wobei durch entsprechende Ventile oder sonstige Ansteuerung die gewünschten Düsen angesteuert werden.

In einer bevorzugten Ausgestaltung der Erfindung ist auch vorgesehen, daß an dem Mitnehmer mindestens ein Anschluß für flüssiges und/oder gasförmiges Reinigungsmedium vorgesehen ist und über den Anschluß, wenn der Mitnehmer mit der Palette zusammenwirkt, das Reinigungsmedium zur Spüldüse der Palette gelangt. Dadurch wird dem Mitnehmer nicht nur eine kraftübertragende Funktion aufgegeben, sondern noch eine weitere Funktion zugeordnet. Der Mitnehmer dient als Anschlußstück, um die Palette mit dem entsprechenden Reinigungsmedium versorgen zu können. Werden mehrere Anschlüsse vorgesehen, kann dadurch problemlos eine entsprechende Ansteuerung von Düsen im vorderen oder hinteren Bereich der Palette je nach Einsatzzweck und so weiter erreicht werden. Gleichzeitig wird die Verbindung an dem Anschluß automatisch mit dem Verbinden des Mitnehmers mit der Palette erstellt und erhöht die Prozeßsicherheit der kompletten Erfindung, sei es der des Palettenwechselsystemes oder der entsprechend ausgestalteten Palette.

In einer bevorzugten Ausgestaltung der Erfindung ist vorgesehen, daß die Regelparameter des Mitnehmerantriebes lastabhängig veränderlich sind. Hierdurch wird erreicht, daß zum Beispiel eine Bewegung der Palette unabhängig von der Beladung der Palette immer mit der gleichen Geschwindigkeit erfolgt.

Des weiteren sieht die Erfindung vor, daß zum Auf- beziehungsweise Ausfädeln des Mitnehmers die Bewegung des Mitnehmers mit der Bewegung des Tisches interpolierend gesteuert ist. Es ist zum Beispiel vorgesehen, daß die Bewegung dieser beiden Elemente aufeinander abgestimmt ist. Wenn also die Bearbeitung auf der Palette abgeschlossen ist und die Palette zum Austransportieren positioniert werden soll, wird gleichzeitig der Antrieb des Mitnehmers aktiviert, um eine gegenseitig günstig beeinflußte Annäherung der beiden Elemente zu erreichen. Dabei kann es günstig sein, daß die jeweiligen Geschwindigkeiten aufeinander abgestellt sind oder aber daß die jeweiligen Endpositionen in einem bestimmten (zeitlichen) Verhältnis zueinander erreicht werden.

Es ist von Vorteil, wenn der Mitnehmer von der Palette trennbar ist, wenn die Palette auf dem Rüstplatz steht. Zum Beispiel ist vorgesehen, daß die Palette von dem Palettenwechselsystem entfernt wird (zum Beispiel für umfangreichere Aufbauten und so weiter). Hierzu wird der Mitnehmer, der ja an dem Palettenwechselsystem verbleibt, von der Palette abgehängt.

Es ist von Vorteil, wenn ein drehbarer Rüstplatz vorgesehen ist. Dieser erlaubt, die Palette zum Beispiel für Rüstzwecke zu drehen und so zu positionieren. Gegebenenfalls weist die Palette auf der Unterseite auch zwei oder mehrere Klauen auf, damit diese idealerweise mit dem Mitnehmer zusammenwirken können. Auch für das Drehen der Palette ist es günstig, daß der Mitnehmer von der Palette trennbar ist, wenngleich dies nicht Voraussetzung ist, da auch in einer weiteren erfindungsgemäßen Ausgestaltung vorgeschlagen wird, daß die Palette auf dem Rüstplatz um den Mitnehmer drehbar ist. In diesem Fall ist ein Entkoppeln von Mitnehmer und Palette während des Drehens nicht notwendig. Bevorzugterweise ergreift der Mitnehmer in diesem Fall die Palette mittig. Das Drehen der Palette über dem Mitnehmer ist aber hierauf nicht beschränkt. Selbstverständlich ist auch eine Verdrehung um den Mitnehmer in einer anderen Anordnung möglich.

Für den Fall, daß Mitnehmer und Klaue nicht getrennt werden, wenn die Palette gedreht wird, wird vorgesehen, daß Klaue und Mitnehmer so ausgebildet sind, daß ihre funktionsfähigen Teile von Zylinderflächen gebildet sind. Gegebenenfalls ist in diesem Fall auch vorgesehen, daß zum Auffädeln der Palette auf dem Mitnehmer eine Kombination von Tischlinearbewegung und Tischdrehung vorgesehen ist.

In den Unteransprüchen sind zusätzliche erfindungsgemäße Weiterentwicklungen dargestellt. Die Erfindung ist des weiteren in den Zeichnungen dargestellt.

Es zeigen:
- Fig. 1:: in einer dreidimensionalen Ansicht das erfindungsgemäße Palettensystem beziehungsweise Bearbeitungszentrum;
- Fig. 2:: ebenfalls in einer dreidimensionalen Ansicht ein Element des erfindungsgemäßen Palettenwechselsystems;
- Fig. 3:: in einer Seitenansicht ein Detail des erfindungsgemäßen Palettenwechselsystems;

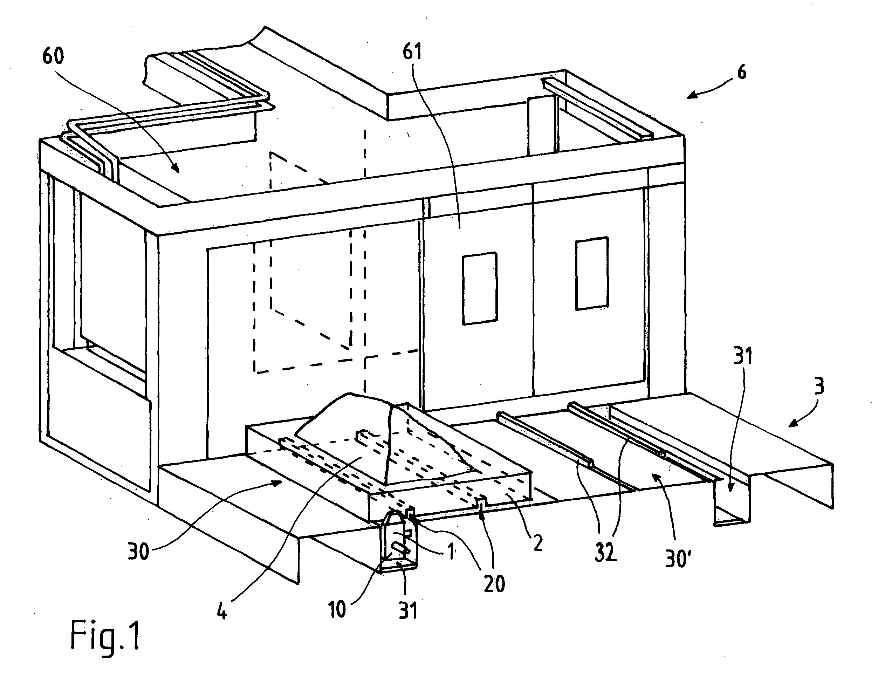

Die Erfindung ist schematisch in Fig. 1 gezeigt.

Fig. 1 zeigt ein erfindungsgemäßes Bearbeitungszentrum mit einer Werkzeugmaschine 6 für die Bearbeitung von auf Paletten 2 aufgespannten Werkstücken 4. Des weiteren ist ein Palettenwechselsystem hier realisiert, welches dafür sorgt, daß die Paletten 2 mit aufgespannten, aber noch nicht bearbeiteten Werkstücken 4 in den Arbeitsraum 60 der Werkzeugmaschine 6 gefördert werden und fertig bearbeitete Werkstücke 4 über die Palette 2 aus der Werkzeugmaschine 6 heraus zu transportieren. Es wird gewünscht, daß der Betrieb einer entsprechenden Bearbeitung automatisch, wenn nicht sogar vollautomatisch abläuft, das heißt, die hergerichteten Werkstücke werden auf der Palette aufgespannt und von dieser automatisch in die Werkzeugmaschine eingefördert, wenn diese entsprechend benötigt werden. Entsprechend werden die Paletten automatisch herausgefördert, wenn die Bearbeitung abgeschlossen ist.

Die Werkzeugmaschine 6 weist zwei Maschinentüren 61 auf. In der in Fig. 1 gezeigten Darstellung ist die linke Türe zur Seite geschoben, also geöffnet, um die davor liegende Palette 2 in den Arbeitsraum 60 einfördern zu können. Die dargestellte Situation entspricht also gerade dem zweiten Teil der Wechselprozedur, also dem Teil, in welchem eine vorher hergerichtete Palette wieder in die Werkzeugmaschine zurückgeführt wird. Zur erhöhten Übersichtlichkeit ist in Figur 1 die rechte Palette nicht gezeigt, auf diesem Rüstplatz müsste sich eigentlich sonst eine herausgezogene Palette befinden.

Vor der Werkzeugmaschine 6 befindet sich ein Gestell 3, welches die Rüstplätze 30, 30' trägt. Auf den Rüstplätzen 30, 30' werden die zu bearbeiteten Werkstücke 4 auf der Palette 2 montiert und aufgebaut. Das Gestell 3 weist zur Führung der Palette 2 Führungsschienen 32 auf, die mit entsprechenden Führungsnuten 20 der Palette 2 zusammenwirken.

Der Antrieb für die Bewegung der Palette 2 befindet sich in dem Kanal 31. Der Kanal 31 nimmt dabei den Mitnehmerantrieb 11 auf und erstreckt sich parallel zu den Führungsschienen 32 unterhalb der Palette. Der Mitnehmerantrieb 11 treibt einen Mitnehmer 1 längsbeweglich an. Dieser Mitnehmer 1 sorgt für eine Abzieh- oder Einförderbewegung der Palette 2, entweder aus der Werkzeugmaschine 6 heraus oder in diese hinein.

Der Mitnehmer 1 sitzt dabei auf einem Schlitten 10. Der Schlitten 10 wird zum Beispiel auf einer Antriebspindel 12 längsbeweglich angetrieben.

Erfindungsgemäß werden eine Vielzahl verschiedener Antriebe des Mitnehmers 1 vorgeschlagen. Diese können zum Beispiel hydraulisch, servopneumatisch oder elektrisch ausgebildet sein. Es können Getriebe, zum Beispiel Zugmittel (Riemen, Ketten), Ritzel-Zahnstangen-Systeme oder Gewindespindeln 12 eingesetzt werden. Auch der Einsatz von Linearmotoren ist möglich, in diesem Fall kann auf ein Getriebe verzichtet werden.

Vorteilhaft wird der Antrieb mit einem Servoantrieb ausgestattet. Dadurch können Geschwindigkeit und Beschleunigung lastabhängig gewählt werden. Des weiteren kann die Schlittenbewegung mit der Bewegung des Bearbeitungstisches (im Arbeitsraum 60 angeordnet, in den Figuren nicht gezeigt) kombiniert werden. Dadurch wird erreicht, daß entsprechend der Bewegung des Bearbeitungstisches der Mitnehmer 1 bereits positioniert werden kann.

Es ist ein Gestell 3 vorgesehen, welches die Palette 2 außerhalb der Werkzeugmaschine 6 trägt und den Rüstplatz 30, 30' bildet. In dem hier dargestellten Ausführungsbeispiel sind zwei Rüstplätze 30, 30' für die Werkzeugmaschine 6 vorgesehen. Es ist möglich, mehrere Rüstplätze pro Werkzeugmaschine anzuordnen, dies hängt von dem jeweiligen Einsatzzweck ab.

Es ist eine Indexierung oder Festlegung der Palette 2 auf dem Rüstplatz 30 vorgesehen. Dies kann zum Beispiel durch entsprechende Bolzen oder eine Rastklinke erfolgen, oder aber der Mitnehmerantrieb 11 hält den Schlitten 10 in entsprechender Position. Dadurch wird eine ungewollte Bewegung der Palette sicher vermieden. Zusätzlich kann ein mechanischer Endanschlag vorgesehen werden.

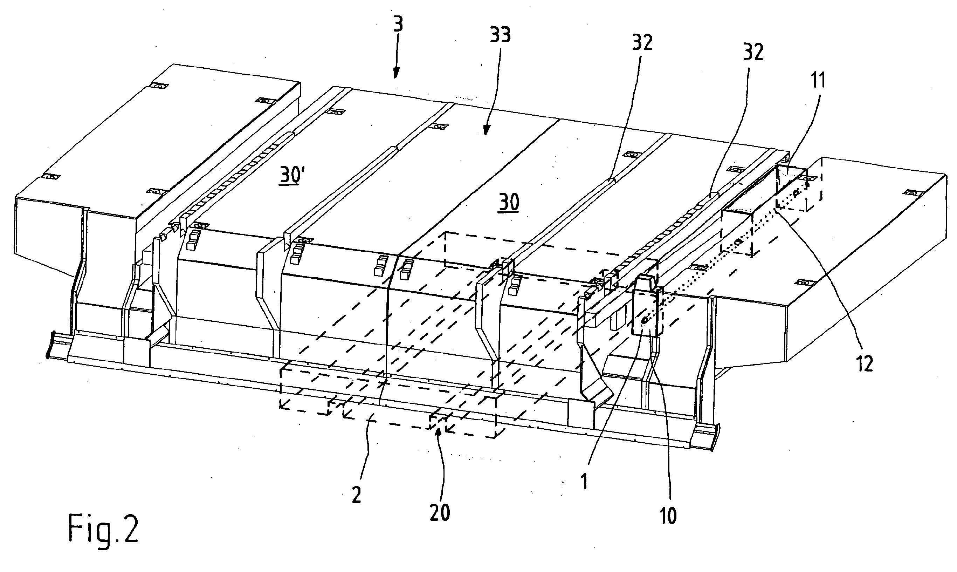

In Fig. 2 ist das Gestell 3 der Erfindung als Einzelelement dargestellt. Die gewählte Ansicht ist im Bezug auf die Werkzeugmaschine 6 von dieser heraus gewählt. Die von dem Rüstplatz 30 in die Werkzeugmaschine 1 (nicht gezeigt) vorgeschobene Palette 2 ist gestrichelt angedeutet.

In der Regel wird die Bearbeitungsspindel der Werkzeugmaschine 6 mittig bezüglich dessen Gehäuse angeordnet sein. Die Palette 2 wird von dem Rüstplatz 30 in die Werkzeugmaschine eingefördert und dort von einem Bearbeitungstisch übernommen und der entsprechenden Bearbeitung an der Werkzeugspindel zugeführt. Erfindungsgemäß wird vorgeschlagen, daß für das Verbinden der Palette 2 mit dem Mitnehmer 1 die Bewegung des Bearbeitungstisches dient. Günstigerweise wird hierbei der Mitnehmer 1 die Palette 2 an ihrem außermittigen Bereich ergreifen. Dadurch wird erreicht, daß möglichst keine Kollision der Bewegung des Bearbeitungstisches mit dem Mitnehmer 1 während der Bearbeitung erfolgt. Umgekehrt kann der Mitnehmer 1 bereits dann im Arbeitsraum 60 positioniert werden, während die eigentliche Bearbeitung an dem Werkstück 4 gerade beendet ist. Daher ist es auch günstig, wenn der Mitnehmer 1 die Palette 2 an ihrem der Bearbeitungsspindel der Werkzeugmaschine 6 abgewandten Palettenseite ergreift. In diesem Fall fährt der Bearbeitungstisch die Palette ganz auf die Seite, bis eben der Mitnehmer 1 die Palette 2, zum Beispiel eine nicht dargestellte Klaue oder ein Kopplungselement, ergreift. Gleichzeitig ist oftmals anzunehmen, daß dieser extreme Auszug des Bearbeitungstisches nur in sehr wenigen Bearbeitungsfällen auftritt und deswegen eine Behinderung oder Störung des normalen Betriebes fast vollständig auszuschließen ist.

Für den Fall, daß der Längshub des Tisches doch häufig für die Bearbeitung benutzt wird, könnte auch vorgesehen werden, daß der Längshub über das für die Bearbeitung erforderliche Maß hinaus verlängert wird. Hierdurch wird Weg für das Einfädeln des Mitnehmers geschaffen.

Daher ergibt sich auch die bezüglich der Mittelebene symmetrische Anordnung der Kanäle 31, die dem Mitnehmerantrieb 11 der beiden Rüstplätze.

Die Anordnung der beiden Antriebe jeweils am seitlichen Ende des Tischhubes bietet des weiteren den Vorteil, daß der Platz zwischen den Palettenführern 32 frei bleibt und an dieser Stelle eine Drehvorrichtung für die Palette am Rüstplatz angeordnet werden kann.

Um zu erreichen, daß Spülflüssigkeit und so weiter, welche auf der Oberfläche 33 des Gestells 3 auftritt, sicher abgeleitet wird, ist vorgesehen, daß das Gestell an seiner der Palette zugewandten Seite eine schräge, in Richtung auf die Werkzeugmaschine geneigte Oberfläche aufweist, damit Flüssigkeit in Richtung auf die Werkzeugmaschine 6 ablaufen kann und dort von dem sowieso vorgesehenen Spülmittelkreislauf aufgenommen und versorgt wird.

In der bevorzugten Ausgestaltung der Erfindung ist vorgesehen, daß der Kanal 31 an seiner der Palette 2 zugewandten Seite eine elastische Abdichtung aufweist, die bei einer Bewegung des Mitnehmers 1 im Bereich des Mitnehmers 1 zurückzuweichen vermag. Hierzu ist zum Beispiel vorgesehen, daß eine im wesentlichen L-artig gebogene Gummilippe beidseitig des Randes des Kanales 31 angeordnet ist und diese Gummilippe den schwertartigen nach oben vorstehenden Mitnehmer 1 durchgreifen läßt und von diesem zurückgedrückt wird. Im übrigen Bereich aber verdeckt die Gummilippe den Kanal 31 und vermeidet so, daß Verschmutzungen oder sonstige Gegenstände in den Kanal 31 fallen.

Des weiteren ist vorgesehen, daß der Kanal 31 durch eine seitliche Türe/Klappe gegen das Eindringen von Spänen aus dem Arbeitsraum 60 geschützt ist. Diese Türe wird zum Beispiel von einer Steuerkurve am Schlitten 10 geöffnet und durch eine Feder geschlossen. Es kann aber auch eine andere Zwangssteuerung vorgesehen werden. Um eine Stellungsabfrage dieser Türe einzusparen, wird vorgesehen; daß die Maschinentüre 61 nur geschlossen werden kann, wenn die Kanalklappe oder Türe geschlossen ist.

In einer bevorzugten Ausgestaltung der Erfindung ist eine Reinigungsvorrichtung vorgesehen, um die Palettenunterseite und/oder die Gestelloberseite 33 von Spänen oder dergleichen freizuhalten. Diese Reinigungsvorrichtung dient dazu, zu verhindern, daß Späne den Palettenwechselvorgang behindern können. Hierzu werden mehrere unterschiedliche, auch jeweils einzeln einsetzbare Maßnahmen vorgeschlagen. Zum Beispiel ist als Reinigungsvorrichtung ein auf einem Schlitten gelagerter, von dem Mitnehmerantrieb 11 angetriebener Abstreifer vorgesehen. Dieser Abstreifer bewegt sich mit dem Mitnehmer mit und überstreicht die Oberfläche und befreit diese von entsprechenden Spänen. Alternativ ist vorgesehen, daß die Reinigungsvorrichtung einen auf einem Schlitten gelagerten, mit dem Mitnehmerantrieb 11 antreibbaren Arm mit Spüldüsen für flüssige und/oder gasförmige Reinigungsmedien aufweist.

Gemäß der Erfindung ist hierbei vorgesehen, daß die Reinigungsvorrichtung auf einem zweiten, unabhängigen Schlitten angeordnet ist oder mit dem Schlitten des Mitnehmers 1 verbunden ist.

Es ist auch möglich, daß in der Palette entsprechende Düsen vorgesehen sind, um die Palette beziehungsweise die Auflageflächen oder -bereiche entsprechend zu spülen. Auch ist es möglich, die Klaue an der Palette, die mit dem Mitnehmer 1 zusammenwirkt, entsprechend zu reinigen. Teile der Führung, die in den Arbeitsraum hineinragen, werden zum Beispiel von Düsen gereinigt, die in der Maschinentüre 61 angebracht sind.

Um die Palette 2 auch bei ungünstiger Schwerpunktlage von Werkstücken 4 gegen Umkippen zu sichern, ist an der Führungsschiene 32 eine Kippsicherungsleiste angeordnet, die insbesondere in eine Hinterschneidung der Führungsnut 20 der Palette greift. Üblicherweise weisen die Paletten eine T-förmige Nut auf und die von dem T gebildete Hinterschneidung dient zum Zusammenwirken der Kippsicherungsleiste mit der Palette. Letztendlich greift somit die Kippsicherungsleiste formschlüssig in die Nut 20 der Palette ein. Dabei ist vorgesehen, daß diese Leiste demontierbar ausgebildet ist, damit die Palette aus dem System ein- und ausgewechselt oder -geschleust werden kann. Hierzu kann zum Beispiel ein Kran dienen.

Um zu verhindern, daß der Palettenwechsler beziehungsweise das erfindungsgemäße System trotz demontierter Leiste betrieben wird, ist ein Sicherheitsschalter vorgesehen, der mit einem Element an der Leiste eindeutig zusammenwirkt. Vorzugsweise ist der Sicherheitsschalter berührungslos und das Element besitzt einen zugehörigen Codeträger für eine eindeutige Ansteuerung. Die Steuerung gibt den Betrieb des Systemes nur frei, wenn der Sicherheitsschalter die montierte Leiste erkennt.

Ein Vorzug der Erfindung liegt darin, daß es auf dem Gestell außer den Führungen 32 und dem Mitnehmer 1 keine Funktionselemente gibt. Daher kann das Gestell mit einer begehbaren Abdeckung versehen werden, aus welcher nur die Führung 32 und der Mitnehmer 1 (an der jeweiligen Dichtlippe) herausragen. Dadurch wird eine weitgehend glatte Oberfläche realisiert, die mehrseitig begehbar und zugänglich ist. Der Schlitten 10 sowie der Antrieb 11 befinden sich unterhalb der begehbaren Abdeckung.

Es ist vorgesehen, daß der Schlitten 10 und der Mitnehmer 1 einteilig ausgebildet sind. Es ist aber auch möglich, diese aus mindestens zwei Teilen zu bilden, insbesondere in Fällen der Wartung. In diesem Fall kann dann der Mitnehmer 1 gehärtet sein und ist bei Verschleiß einfacher tauschbar.

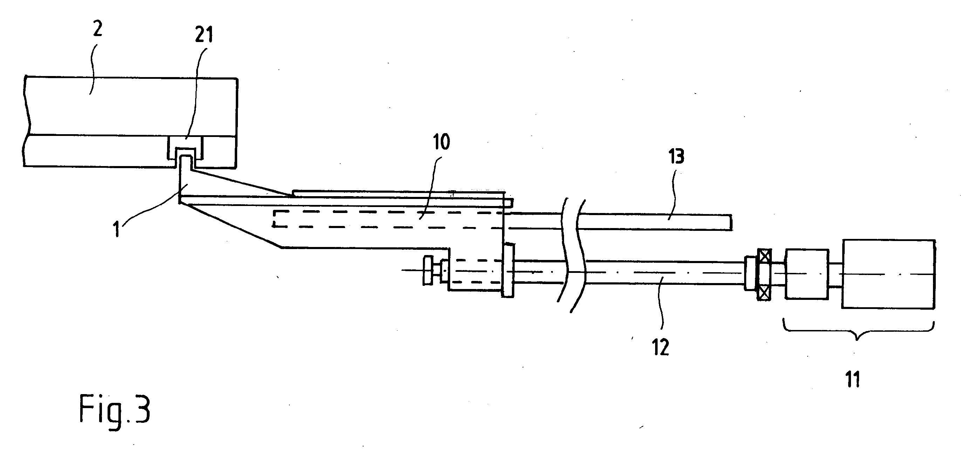

In Fig. 3 ist in einer Seitenansicht das Zusammenwirken des Mitnehmers 1 mit der Palette 2 gezeigt. Der Mitnehmer 1, der sich an dem Schlitten 10 befindet, greift auf der Unterseite der Palette 2 in eine Klaue 21 ein. Die Klaue 21 befindet sich unter der Palette, sie steht nicht vor.

Für die Führung des Schlittens 10 auf der Antriebsspindel 12 ist eine Führungsschiene 13 vorgesehen. Die Antriebseinheit 11 besteht aus einem Motor und aus einer Kupplung. Die Antriebsspindel 12 wird auf Lagern gelagert. Der Aufbau ist sehr einfach und zuverlässig.

Der Mitnehmer 1 ist rechtwinkelig zur Bewegungsrichtung des Schlittens 10 gradlinig ausgebildet, um ein seitliches (rechtwinkliges) Einfädeln der Palette 2, über die Klaue 21, auf den Mitnehmer 1 zu erreichen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen. Die jetzt mit der Anmeldung und später eingereichten Ansprüche sind Versuche zur Formulierung ohne Präjudiz für die Erzielung weitergehenden Schutzes.

## Patentansprüche

1. Palettenwechselsystem für das Wechseln der das zu bearbeitende Werkstück tragenden Palette in einer Werkzeugmaschine, insbesondere einem Bearbeitungszentrum, wobei ein antreibbarer Mitnehmer die Palette zwischen einem Bearbeitungstisch in der Werkzeugmaschine und einem Rüstplatz außerhalb der Werkzeugmaschine bewegt, **dadurch gekennzeichnet, daß** der Mitnehmer (1) derart ausgebildet ist, daß er für das Verbinden der Palette mit dem Mitnehmer (1) durch die Bewegung des Bearbeitungstisches dient.

2. Palettenwechselsystem nach Anspruch 1, **dadurch gekennzeichnet, daß** sich der Mitnehmer (1) bei dem Verbinden mit der Palette (2) unter dieser befindet und die Palette (2) beziehungsweise ein Kupplungsstück oder eine Klaue durch eine Bewegung des Bearbeitungstisches ausgelöste Bewegung der Palette (2) diese mit dem Mitnehmer (1) verbunden beziehungsweise aufgefädelt wird.

3. Palettenwechselsystem nach einem oder beiden der vorhergehenden Ansprüche, **dadurch gekennzeichnet, daß** der Mitnehmer (1) auf einem auf einer Führungsbahn bewegbaren Schlitten (10) angeordnet ist.

4. Palettenwechselsystem nach einem oder mehreren der vorhergehenden Ansprüche, **dadurch gekennzeichnet, daß** zur Verbindung der Palette (2) mit dem Mitnehmer (1) eine Klaue (21), vorzugsweise nicht vorstehende beziehungsweise verdeckt angeordnete Klaue, unterhalb der Palette (2) angeordnet ist.

5. Palettenwechselsystem nach einem oder mehreren der vorhergehenden Ansprüche, **gekennzeichnet durch** eine formschlüssige Verbindung zwischen der Palette (2) mit dem Mitnehmer (1).

6. Palettenwechselsystem nach einem oder mehreren der vorhergehenden Ansprüche, **dadurch gekennzeichnet, daß** für die Führung des Schlittens (10) eine Führungsschiene (13) vorgesehen ist und eine Antriebseinheit (11) über die Antriebsspindel (12) den Schlitten (10) antreibt.

7. Palettenwechselsystem nach einem oder mehreren der vorhergehenden Ansprüche, **dadurch gekennzeichnet, daß** der Mitnehmer (1) rechtwinklig zur Bewegungsrichtung des Schlittens (10) geradlinig ausgebildet ist, um ein seitliches, vorzugsweise rechtwinkliges Einfädeln der Palette (2) über die Klaue (21) auf den Mitnehmer (1) zu erreichen.

8. Palettenwechselsystem nach einem oder mehreren der vorhergehenden Ansprüche, **dadurch gekennzeichnet, daß** ein Gestell (3) vorgesehen ist, welches die Palette (2) außerhalb der Werkzeugmaschine (6) trägt und den Rüstplatz (30) bildet.

9. Palettenwechselsystem nach einem oder mehreren der vorhergehenden Ansprüche, **dadurch gekennzeichnet, daß** das Gestell (3) einen Kanal (31) für die Aufnahme des Mitnehmerantriebes (11) aufweist.

10. Palettenwechselsystem nach einem oder mehreren der vorhergehenden Ansprüche, **dadurch gekennzeichnet, daß** zwischen Rüstplatz (30) und Bearbeitungstisch eine Maschinentüre (61) zum Verschließen des Arbeitsraumes der Werkzeugmaschine vorgesehen ist.

11. Palettenwechselsystem nach einem oder mehreren der vorhergehenden Ansprüche, **dadurch gekennzeichnet, daß** der Mitnehmer (1) die Palette (2) an ihrem außermittigen Bereich ergreift.

12. Palettenwechselsystem nach einem oder mehreren der vorhergehenden Ansprüche, **gekennzeichnet durch** mindestens zwei Rüstplätze (30, 30') pro Werkzeugmaschine (6).

13. Palettenwechselsystem nach einem oder mehreren der vorhergehenden Ansprüche, **dadurch gekennzeichnet, daß** mindestens zwei Rüstplätze (30, 30') vorgesehen sind, die parallel vor dem Arbeitsraum (60) bzw. den Maschinentüren (61) angeordnet sind, derart daß der Palettenwechsel aus bzw. in den Arbeitsraum (60) jeweils zu dem gleichen Rüstplatz (30, 31) erfolgt, von dem die Palette (2) in den Arbeitsraum (60) gefördert wurde.

14. Palettenwechselsystem nach einem oder mehreren der vorhergehenden Ansprüche, **dadurch gekennzeichnet, daß** der Mitnehmer (1) die Palette (2) an ihrem der Bearbeitungsspindel der Werkzeugmaschine (6) abgewandten Palettenseite ergreift.

15. Palettenwechselsystem nach einem oder mehreren der vorhergehenden Ansprüche, **gekennzeichnet durch** eine Indexierung oder Festlegung der Palette auf dem Rüstplatz.

16. Palettenwechselsystem nach einem oder mehreren der vorhergehenden Ansprüche, **dadurch gekennzeichnet, daß** das Gestell (3) an seiner der Palette (2) zugewandten Seite und/oder der Boden des Kanals (31) eine schräg in Richtung auf die Werkzeugmaschine (6) geneigte/abgesenkte Oberfläche aufweist.

17. Palettenwechselsystem nach einem oder mehreren der vorhergehenden Ansprüche, **dadurch gekennzeichnet, daß** der Kanal (31) an seiner der Palette (2) zugewandten Seite eine elastische Abdichtung aufweist, die bei einer Bewegung des Mitnehmers (1), im Bereich des Mitnehmers (1), zurückzuweichen vermag.

18. Palettenwechselsystem nach einem oder mehreren der vorhergehenden Ansprüche, **dadurch gekennzeichnet, daß** der Kanal (31) an dem der Werkzeugmaschine (6) zugewandten Ende eine insbesondere steuerbare Türe oder Klappe aufweist.

19. Palettenwechselsystem nach einem oder mehreren der vorhergehenden Ansprüche, **dadurch gekennzeichnet, daß** eine Reinigungsvorrichtung vorgesehen ist, um die Palettenunterseite und/oder die Gestelloberseite von Spänen oder dergleichen freizuhalten.

20. Palettenwechselsystem nach einem oder mehreren der vorhergehenden Ansprüche, **dadurch gekennzeichnet, daß** die Reinigungsvorrichtung einen auf einem Schlitten gelagerten, von dem Mitnehmerantrieb angetriebenen Abstreifer aufweist.

21. Palettenwechselsystem nach einem oder mehreren der vorhergehenden Ansprüche, **dadurch gekennzeichnet, daß** die Reinigungsvorrichtung einen auf einem Schlitten gelagerten, mit dem Mitnehmerantrieb antreibbaren Arm mit Spüldüsen für flüssige und/oder gasförmige Reinigungsmedien aufweist.

22. Palettenwechselsystem nach einem oder mehreren der vorhergehenden Ansprüche, **dadurch gekennzeichnet, daß** die Maschinentüre (61) eine gegebenenfalls auch verschließbare Öffnung für den Mitnehmer (1) aufweist, damit dieser bei ansonsten geschlossener Maschinentüre (61) im Arbeitsraum (60) positioniert werden kann.

23. Palettenwechselsystem nach einem oder mehreren der vorhergehenden Ansprüche, **dadurch gekennzeichnet, daß** an dem Mitnehmer (1) mindestens ein Anschluß für flüssiges und/oder gasförmiges Reinigungsmedium vorgesehen ist und über den Anschluß, wenn der Mitnehmer (1) mit der Palette (2) zusammenwirkt, das Reinigungsmedium zur Spüldüse der Palette gelangt.

24. Palettenwechselsystem nach einem oder mehreren der vorhergehenden Ansprüche, **dadurch gekennzeichnet, daß** an der Führungsschiene (32) für die Palette (2) eine demontierbare Kippsicherungsleiste vorgesehen ist, die in eine Hinterschneidung der Führungsnut (32) der Palette (2) greift.

25. Palettenwechselsystem nach einem oder mehreren der vorhergehenden Ansprüche, **dadurch gekennzeichnet, daß** an der Kippsicherungsleiste ein Sicherheitsschalter vorgesehen ist.

26. Palettenwechselsystem nach einem oder mehreren der vorhergehenden Ansprüche, **dadurch gekennzeichnet, daß** der Antrieb (11) des Mitnehmers (1) hydraulisch, servopneumatisch oder elektrisch oder elektromechanisch ausgebildet ist und Zugmittel, insbesondere Riemen oder Ketten oder Ritzel-Zahnstangen-Antriebe, Gewindespindeln, Linearmotoren oder Servoantriebe Verwendung finden.

27. Palettenwechselsystem nach einem oder mehreren der vorhergehenden Ansprüche, **dadurch gekennzeichnet, daß** die Regelparameter des Mitnehmerantriebes lastabhängig veränderlich sind.

28. Palettenwechselsystem nach einem oder mehreren der vorhergehenden Ansprüche, **dadurch gekennzeichnet, daß** zum Auf- beziehungsweise Ausfädeln des Mitnehmers (1) die Bewegung des Mitnehmers mit der Bewegung des Tisches interpolierend gesteuert ist.

29. Palettenwechselsystem nach einem oder mehreren der vorhergehenden Ansprüche, **dadurch gekennzeichnet, daß** der Mitnehmer (1) von der Palette (2) trennbar ist, wenn die Palette (2) auf dem Rüstplatz (30) steht.

30. Palettenwechselsystem nach einem oder mehreren der vorhergehenden Ansprüche, **gekennzeichnet durch** einen drehbaren Rüstplatz (30).

31. Palettenwechselsystem nach einem oder mehreren der vorhergehenden Ansprüche, **dadurch gekennzeichnet, daß** der Mitnehmer (1) die Palette (2) mittig ergreift.

32. Palettenwechselsystem nach einem oder mehreren der vorhergehenden Ansprüche, **dadurch gekennzeichnet, daß** die Palette (2) auf dem Rüstplatz (30) um den Mitnehmer (1) drehbar ist.

33. Palettenwechselsystem nach einem oder mehreren der vorhergehenden Ansprüche, **dadurch gekennzeichnet, daß** auf der Unterseite der Palette (2) zwei oder mehrere Klauen (21) angeordnet sind.

34. Verfahren zum Wechseln einer Palette in einer Werkzeugmaschine, insbesondere einem Bearbeitungszentrum, wobei die Palette von dem Bearbeitungstisch in der Werkzeugmaschine durch einen Mitnehmer auf einen Rüstplatz außerhalb der Werkzeugmaschine abgezogen beziehungsweise zurückbewegt wird, wobei beim Abziehen der Palette zunächst der Mitnehmer im Arbeitsraum der Werkzeugmaschine positioniert wird und dann die Palette durch eine Bewegung des Bearbeitungstisches mit dem Mitnehmer verbunden wird und hernach der Mitnehmer die Palette auf den Rüstplatz zieht.

35. Verfahren nach Anspruch 34, **dadurch gekennzeichnet, daß** die Palette nach der Bearbeitung des Werkstückes aus dem Arbeitsraum jeweils auf den Rüstplatz gefördert wird, von dem aus sie in den Arbeitsraum eingefördert wurde.

36. Verfahren nach einem oder beiden der Ansprüche 34 und 35, **dadurch gekennzeichnet, daß** die Positionierung des Mitnehmers im Arbeitsraum während der Bearbeitung oder unmittelbar im Anschluß an die Bearbeitung des Werkstückes erfolgt.

37. Verfahren nach einem oder mehreren der vorhergehenden Ansprüche 34 bis 36, **dadurch gekennzeichnet, daß** die Positionierung des Mitnehmers im Arbeitsraum bei geschlossener oder fast geschlossener Maschinentüre erfolgt.

38. Palette, insbesondere für ein Palettenwechselsystem, nach einem oder mehreren der Ansprüche 1 bis 33, wobei die Palette Führungsmittel für eine Führung der Palette zwischen Rüstplatz und Bearbeitungstisch sowie eine Klaue aufweist, mit der die Palette von einem Mitnehmer für Transportzwecke ergriffen werden kann, **dadurch gekennzeichnet, daß** sich die Klaue (21) unter der Palette (2) befindet.

39. Palette nach Anspruch 38, **dadurch gekennzeichnet, daß** die Palette (2) Spüldüsen für flüssiges und/oder gasförmiges Reinigungsmedium aufweist.

40. Palette nach einem oder beiden der Ansprüche 38 und 39, **dadurch gekennzeichnet, daß** die Klaue (21) insbesondere verdeckt angeordnet und derart ausgebildet ist, daß eine formschlüssige, insbesondere sichere vor Verunreinigungen geschützte Verbindung zwischen Mitnehmer (1) und Klaue (21) beim Eingreifen erhalten wird.

41. Palette nach einem oder mehreren der vorhergehenden Ansprüche 38 bis 40, **dadurch gekennzeichnet, daß** jeweils die in Transportrichtung der Palette (2) vorne angeordneten Spüldüsen mit Reinigungsmedium versorgt werden.

42. Palette nach einem oder mehreren der vorhergehenden Ansprüche 38 bis 41, **dadurch gekennzeichnet, daß** Mitnehmer (1) und Klaue (21) eine zusammenwirkende Kupplung aufweisen, durch die die Spüldüsen mit Reinigungsmedium versorgt werden.

43. Bearbeitungszentrum mit einer Werkzeugmaschine für die Bearbeitung von auf Paletten aufgespannten Werkstücken und einem Palettenwechselsystem nach einem oder mehreren der Ansprüche 1 bis 33.
